# EUROPEAN PATENT APPLICATION

(11) **EP 0 999 604 A1**
(43) Date of publication of application: **10.05.2000**
(21) Application number: 99308738.6
(22) Date of filing: 03.11.1999
(51) Int. Cl.: H01M 4/52

(54) **Mixed cathode material for high energy density electrochemical cells**

(30) Priority: 04.11.1998 US 185982
(71) Applicant: WILSON GREATBATCH LTD., Clarence New York 14031 (US)
(72) Inventor: Leising, Randolph A., Williamsville, New York 14221 (US); Takeuchi, Esther S., East Amherst, New York 14051 (US)
(74) Representative: Colmer, Stephen Gary

(57) **Abstract**

The present invention is directed to a blended cathode active mixture for a secondary electrochemical cell. The blend includes a first lithiated compound suitable for high delivered capacity under high-rate applications while the second lithiated compound provides high delivered capacity under low discharge rate conditions. The preferred active materials are lithium cobalt oxide and lithium nickel cobalt oxide, such as LiₓCoO₂ and LiₓNi_{y}Co_{1-y}O₂, in particular LiNi_{0.82}Co_{0.18}O₂, and the mixture provides a cathode material having only slightly reduced delivered capacity under low-rate conditions in comparison to the use of pure lithium nickel cobalt oxide and increased delivered capacity under high-rate discharge conditions when compared to either of the materials alone.

## Description

### BACKGROUND OF INVENTION

### 1. Field of the Invention

The present invention generally relates to the conversion of chemical energy to electrical energy, and more particularly, to a mixture of electrode active materials for use as a cathode in secondary alkali metal electrochemical cells, and more preferably in lithium ion cells.

### 2. Prior Art

Lithium cobalt oxide (LiₓCoO₂) is known as a cathode active material in secondary lithium batteries, which are commonly referred to as lithium ion batteries. Examples of patents and publications that describe this material include U.S. Patent No. 4,302,518 to Goodenough et al. and a paper presented by Takeuchi, E.S.; Leising, R.A.; Walsh, K.M. *Proc. 37th Power Sources Conf.* Cherry Hill, NJ, June 17-20, 1996 (pg 212-215). The advantage of lithium cobalt oxide as a secondary cathode material include its relatively high delivered capacity for the intercalation of lithium under high rate applications.

Likewise, lithium nickel cobalt oxide (LiₓNi_{1-y}Co_{y}O₂) has been demonstrated as a cathode active material for use in secondary lithium ion batteries. For further information regarding the use of this active material, see: a) Ohzuku, T.; Ueda, A.; Nagayama, M.; Iwakoshi, Y.; Komori, H. *Electrochim. Acta* 1993, 38, 1159-1167 and b) Delmas, C.; Saadoune, I. *Solid State Ionics,* 1992, *53-56,* 370-375. Lithium nickel cobalt oxide is known to provide a higher delivered capacity than lithium cobalt oxide under relatively low discharge rate conditions.

Specifically, LiNi_{0.82}Co_{0.18}O₂ provides relatively higher delivered capacity than LiCoO₂ when discharged under low-rate conditions (about 0.1 mA/cm² to about 1.0 mA/cm²). However, when cells of a similar construction except for the lithiated cathode material are discharged under high-rate conditions (greater that about 1.0 mA/cm²), LiCoO₂ displays higher delivered capacity than LiNi_{0.82}Co_{0.18}O₂. Thus, while LiNi_{0.82}Co_{0.18}O₂ provides higher capacity than LiCoO₂ under low-rate discharge, it is not as efficient under conditions of high-rate discharge.

### SUMMARY OF THE INVENTION

The present invention is, therefore, directed to the use of lithium cobalt oxide mixed with lithium nickel cobalt oxide as an improved electrode active material for use as a cathode in a secondary lithium electrochemical cell. One of the advantages of this mixed material is its increased capacity during high-rate discharge applications. Increased capacity directly results in increased energy density for the cell. Thus, utilizing a mixture of lithium cobalt oxide and lithium nickel cobalt oxide cathode active materials provides a blend of the comparatively high-power density of the former oxide, and the relatively high capacity associated with the latter oxide, to give a new cathode material displaying enhanced performance exceeding either of the independent materials.

These and other objects of the present invention will become increasingly more apparent to those skilled in the art by reference to the following description and to the appended drawings.

### DETAILED DESCRIPTION OF THE DRAWINGS

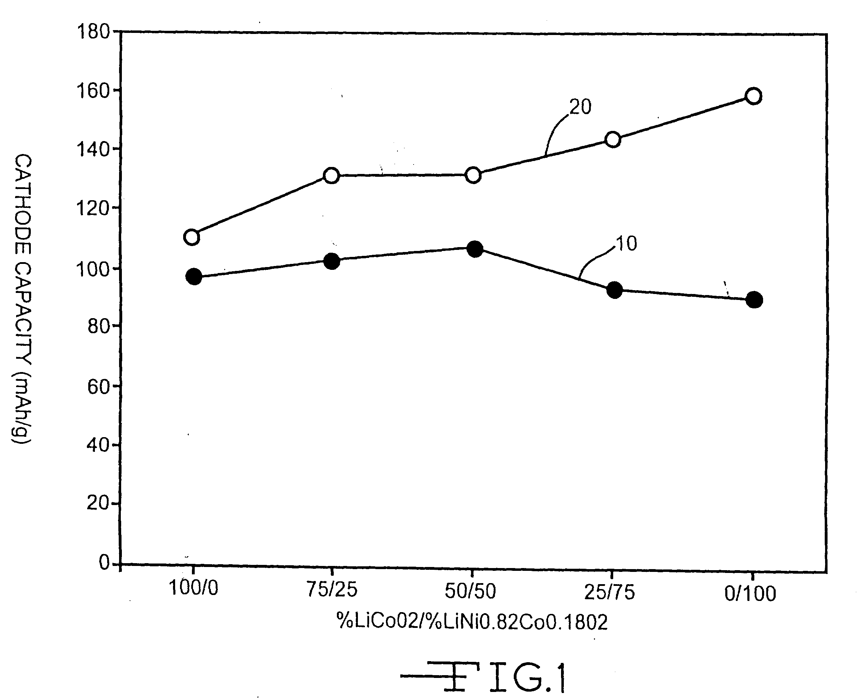

Fig. 1 is a graph constructed from the delivered capacities of cells containing various ratios of lithium cobalt oxide mixed with lithium nickel cobalt oxide and discharged under low-rate conditions and high-rate conditions.

### DETAILED DESCRIPTION OF THE PREFERRED EMBODIMENTS

The mixed cathode formulation of the present invention is useful in both primary and secondary electrochemical cells. Such cells comprise an anode active material selected from Groups IA, IIA, or IIIB of the Periodic Table of Elements, including the alkali metals lithium, sodium, potassium, etc. The preferred anode active material is lithium.

In secondary electrochemical systems, the anode electrode comprises a material capable of intercalating and de-intercalating the alkali metal, and preferably intercalating and de-intercalating lithium. For that purpose, a carbonaceous anode body comprising any of the various forms of carbon (e.g., coke, graphite, acetylene black, carbon black, glassy carbon, etc.) which are capable of reversibly retaining the lithium species is preferred. Graphite is particularly preferred due to its relatively high lithium-retention capacity. Regardless of the form of the carbon, fibers of the carbonaceous material are most advantageous because carbon fibers have excellent mechanical properties which permit them to be fabricated into rigid electrode bodies that are capable of withstanding degradation during repeated charge/discharge cycling. Moreover, the high surface area of carbon fibers allows for rapid charge/discharge rates. A preferred carbonaceous material for the anode of a secondary electrochemical cell is described in U.S. Patent No. 5,443,928 to Takeuchi et al., which is assigned to the assignee of the present invention and incorporated herein by reference.

The anode electrode can also comprise lithium metal or an alloy thereof.. In that'case, the completed cell is initially in a discharged state, as will be described in detail hereinafter, and lithium from the cathode is plated on the lithium anode by applying an externally generated electrical potential to the cell.

A typical secondary cell anode is fabricated by mixing about 90 to 97 weight percent graphite with about 3 to 10 weight percent of a binder material which is preferably a fluoro-resin powder such as polytetrafluoroethylene (PTFE), polyvinylidene fluoride (PVDF), polyethylenetetrafluoroethylene (ETFE), polyamides and polyimides, and mixtures thereof. This electrode active admixture is provided on a current collector such as of a nickel, stainless steel, or copper foil or screen by casting, pressing, rolling or otherwise contacting the active admixture thereto.

The anode electrode further has an extended tab or lead of the same material as the anode current collector, i.e., preferably nickel, integrally formed therewith such as by welding and contacted by a weld to a cell case of conductive metal in a case-negative electrical configuration. Alternatively, the anode may be formed in some other geometry, such as a bobbin shape, cylinder or pellet to allow an alternate low surface cell design.

According to the present invention, the cathode electrode of a secondary cell includes LiₓNi_{1-y}CO_{y}O₂ (0.4 < x ≤ 1, 0 < y < 0.5) and LiₓCoO₂ (0.4 < x ≤ 1). A preferred lithiated cathode material is a mixture of lithium nickel cobalt oxide (LiNi_{0.82}Co_{0.18}O₂) blended with lithium cobalt oxide (LiCoO₂). These materials are stable in air and readily handled.

The lithium nickel cobalt oxide material provides higher delivered capacity than lithium cobalt oxide when discharged under relatively low-rate discharge conditions of about 0.1 mA/cm² to about 1.0 mA/cm². However, under high-rate conditions of greater than about 1.0 mA/cm², the lithium cobalt oxide displays increased delivered capacity in comparison to lithium nickel cobalt oxide. Blending lithium cobalt oxide with lithium nickel cobalt oxide cathode material in a ratio of about 25% to 75% LiNi_{0.82}Co_{0.18}O₂ and about 25% to 75% LiCoO₂ produces the unexpected result of providing a cathode mixture with only slightly reduced delivered capacity under low-rate conditions in comparison to the use of pure lithium nickel cobalt oxide and increased delivered capacity under high-rate discharge conditions in comparison to either pure lithium nickel cobalt oxide or pure lithium cobalt oxide as the sole cathode active material.

This makes the novel cathode mixture of the present invention particularly useful when fabricated into a cell powering an implantable medical device that requires a power source for a generally constant resistance load component provided by circuits performing such functions as routine physiological monitoring. From time to time, the medical device may present a greater load requirement, for example, in an implantable blood pump during device activation. The present secondary cell is particularly suited for such usage.

Before fabrication into an electrode for incorporation into an electrochemical cell, the lithiated active mixture is preferably mixed with about 3 to 10 weight percent of a conductive additive. Suitable conductive additives include acetylene black, carbon black and/or graphite. Metals such as nickel, aluminum, titanium and stainless steel in powder form are also useful as conductive diluents when mixed with the above listed active materials. The cathode electrode further comprises about 1 to 5 weight percent of a fluoro-resin binder, preferably in a powder form, such as polytetrafluoroethylene, polyvinylidene fluoride, polyethylenetetrafluoroethylene, polyamides and polyimides, and mixtures thereof. The cathode active admixture is provided on a current collector such as of a nickel, stainless steel, aluminum, or copper foil or screen by casting, pressing, rolling or otherwise contacting the active admixture thereto.

To discharge such secondary cells, the lithium metal comprising the mixed cathode active mixture is intercalated into the carbonaceous anode by applying an externally generated electrical potential to recharge the cell. The applied recharging electrical potential serves to draw the alkali metal from the cathode material, through the electrolyte and into the carbonaceous anode to saturate the carbon comprising the anode. The resulting LiₓC₆ electrode can have an x ranging from about 0.1 to about 1.0. In the case of the cell having a lithium anode, lithium from the cathode active mixture is plated on the lithium anode during the recharging. In either case, the cell is then provided with an electrical potential and is discharged in a normal manner.

The secondary cell of the present invention includes a separator to provide physical segregation between the anode and cathode active electrodes. The separator is of an electrically insulative material to prevent an internal electrical short circuit between the electrodes, and the separator material also is chemically unreactive with the anode and cathode active materials and both chemically unreactive with and insoluble in the electrolyte. In addition, the separator material has a degree of porosity sufficient to allow flow therethrough of the electrolyte during the electrochemical reaction of the cell. The form of the separator typically is a sheet which is placed between the anode and cathode electrodes. Such is the case when the anode is folded in a serpentine-like structure with a plurality of cathode plates disposed intermediate the anode folds and received in a cell casing or when the electrode combination is rolled or otherwise formed into a cylindrical "jellyroll" configuration.

The electrochemical cell of the present invention further includes a nonaqueous, ionically conductive electrolyte operatively associated with the anode and the cathode electrodes. The electrolyte serves as a medium for migration of ions between the anode and the cathode during the electrochemical reactions of the cell, and nonaqueous solvents suitable for the present invention are chosen so as to exhibit those physical properties necessary for ionic transport (low viscosity, low surface tension and wettability). Suitable nonaqueous solvents are comprised of an inorganic salt dissolved in a nonaqueous solvent and more preferably an alkali metal salt dissolved in a mixture of aprotic organic solvents comprising a low viscosity solvent including organic esters, ethers and dialkyl carbonates, and mixtures thereof, and a high permittivity solvent including cyclic carbonates, cyclic esters and cyclic amides, and mixtures thereof. Low viscosity solvents include tetrahydrofuran (THF), methyl acetate (MA), diglyme, triglyme, tetrglyme, 1,2-dimethoxyethane (DME), 1,2-diethoxyethane (DDE), 1-ethoxy,2-methoxyethane (EME), dimethyl carbonate (DMC), diethyl carbonate (DEC), dipropyl carbonate (DPC), ethyl methyl carbonate (EMC), methyl propyl carbonate (MPC) and ethyl propyl carbonate (EPC), and mixtures thereof. High permittivity solvents include propylene carbonate (PC), ethylene carbonate (EC), butylene carbonate (BC), acetonitrile, dimethyl sulfoxide, dimethyl formamide, dimethyl acetamide, γ-valerolactone, γ-butyrolactone (GBL) and N-methyl-pyrrolidinone (NMP), and mixtures thereof.

The preferred electrolyte comprises an organic alkali metal salt, and in the case of an anode comprising lithium, the alkali metal salt of the electrolyte is a lithium based salt. Known lithium salts that are useful as a vehicle for transport of alkali metal ions from the anode to the cathode, and back again include LiPF₆, LiBF₄, LiAsF₆, LiSbF₆, LiClO₄, LiAlCl₄, LiGaCl₄, LiNO₃, LiC(SO₂CF₃)₃, LiN(SO₂CF₃)₂, LiSCN, LiO₃SCF₂CF₃, LiC₆F₅SO₃, LiO₂CCF₃, LiSO₃F, LiB(C₆H₅)₄ and LiCF₃SO₃, and mixtures thereof. Suitable salt concentrations typically range between about 0.8 to 1.5 molar.

The assembly of the cell described herein is preferably in the form of a wound element cell. That is, the fabricated cathode, anode and separator are wound together in a "jellyroll" type configuration or "wound element cell stack" such that the anode is on the outside of the roll to make electrical contact with the cell case in a case-negative configuration. Using suitable top and bottom insulators, the wound cell stack is inserted into a metallic case of a suitable size dimension. The metallic case may comprise materials such as stainless steel, mild steel, nickel-plated mild steel, titanium or aluminum, but not limited thereto, so long as the metallic material is compatible for use with components of the cell.

The cell header comprises a metallic disc-shaped body with a first hole to accommodate a glass-to-metal seal/terminal pin feedthrough and a second hole for electrolyte filling. The glass used is of a corrosion resistant type having up to about 50% by weight silicon such as CABAL 12, TA 23, FUSITE 425 or FUSITE 435. The positive terminal pin feedthrough preferably comprises molybdenum although titanium, aluminum, nickel alloy, or stainless steel can also be used. The cell header comprises elements having compatibility with the other components of the electrochemical cell and is resistant to corrosion. The cathode lead is welded to the positive terminal pin in the glass-to-metal seal and the header is welded to the case containing the electrode stack. The cell is thereafter filled with the electrolyte solution described hereinabove, and hermetically sealed such as by close-welding a stainless steel ball over the fill hole, but not limited thereto. The above assembly describes a case-negative cell which is the preferred construction for the exemplary secondary cell of the present invention. As is well known to those skilled in the art, the electrochemical system of the present invention can also be constructed in a case-positive configuration.

The following examples describe the manner and process of an electrochemical cell according to the present invention, and they set forth the best mode contemplated by the inventors of carrying out the invention, but they are not to be construed as limiting.

### EXAMPLE I

The ability of a LiNi_{0.82}Co_{0.18}O₂/LiCoO₂ mixed cathode material to intercalate lithium was tested in cells activated with a nonaqueous electrolyte. Each of the experimental cells had a cathode (200 x 20 x 0.06 mm) in the form of an electrode active admixture cast on an aluminum foil substrate (0.02 mm thick). In particular, the two cathode constituents were blended together in weight ratios of 25% to 75% LiNi_{0.18}Co_{0.18}O₂ to 25% to 75% LiCoO₂. The resulting blends were then mixed with 3% carbon black as a conductive additive and 6% poly(vinylidene fluoride) as a binder. The resulting admixtures were added to N,N-dimethylformamide to form a slurry and then cast onto an aluminum foil substrate. After drying, the electrodes were pressed at 0.8 ton/cm² pressure.

In the experimental cells, the cathode was separated from the anode by a polyethylene separator. Graphitic carbon coated on copper foil substrate was used as the anode material and placed against the separator facing the cathode. Both electrodes were configured into a spirally-wound cell design and placed in a cylindrical glass housing. The cells were activated with 1M LiAsF₆ dissolved in 50:50 mixture of, by volume, EC/DMC electrolyte.

The cells were initially cycled in a low-rate discharge test. During the test, the cells were charged and discharged using a constant current of 20 mA (0.5mA/cm²) between voltage limits of +2.75 V to +4.1 V vs Li/Li⁺. The results of the low-rate discharge test are given in Table 1 and illustrated by curve 10 in Fig. 1.

**Table 1**

| Low-Rate Discharge (0.5 mA/cm²) of Mixed-Cathode/Graphite Lithium Ion Cells | |
|---|---|
| Cathode Material (wt.%) | Cathode Capacity |
| 100% LiCoO₂ | 110 mAh/g |
| 75% LiCoO₂/25% LiNi_{0.82}Co_{0.18}O₂ | 132 mAh/g |
| 50% LiCoO₂/50% LiNi_{0.82}Co_{0.18}O₂ | 132 mAh/g |
| 25% LiCoO₂/75% LiNi_{0.82}Co_{0.18}O₂ | 144 mAh/g |
| 100% LiNi_{0.82}Co_{0.18}O₂ | 159 mAh/g |

### EXAMPLE II

Next, the same test cells were subjected to high-rate discharge testing. These tests were conducted by applying a constant current of 320 mA (8 mA/cm²) to a cutoff voltage of +2.75 V vs Li/Li+ to the cells. The delivered capacities for the high-rate discharge tests are summarized in Table 2 and illustrated by curve 20 in Fig. 1.

**Table 2**

| High-Rate Discharge (8mA/cm²) of Mixed-Cathode/Graphite Lithium Ion Cells | |
|---|---|
| Cathode Material (wt.%) | Cathode Capacity |
| 100% LiCoO₂ | 96 mAh/g |
| 75% LiCoO₂/25% LiNi_{0.82}Co_{0.18}O₂ | 102 mAh/g |
| 50% LiCoO₂/50% LiNi_{0.82}Co_{0.18}O₂ | 108 mAh/g |
| 25% LiCoO₂/75% LiNi_{0.82}Co_{0.18}O₂ | 93 mAh/g |
| 100% LiNi_{0.82}Co_{0.18}O₂ | 92 mAh/g |

Thus, the test results from Examples I and II bear out the benefits of use of a mixed lithiated cathode material in a secondary cell. According to the present invention, a mixture of lithium cobalt oxide and lithium nickel cobalt oxide provides a secondary electrochemical cell with only slightly reduced delivered capacity under low-rate discharge conditions (about 0.1 mA/cm²) in comparison to pure lithium nickel cobalt oxide and increased delivered capacity under high-rate discharge conditions (greater than about 1.0 mA/cm²) in comparison to either material used alone. Specifically, the use of lithium nickel cobalt oxide blended with lithium cobalt oxide wherein each of the lithiated constituents is present at about 50 weight percent provides the best results in comparison to 100 percent of either material use at both discharge levels.

It is appreciated that various modifications to the inventive concepts described herein may be apparent to those or ordinary skill in the art without departing from the spirit and scope of the present invention as defined by the appended claims.

## Claims

1. An electrochemical cell, which comprises:
(a) a negative electrode which is capable of intercalation of insertion of lithium or which comprises lithium metal of an alloy thereof;
(b) a positive electrode operatively associated with the anode, wherein the positive electrode comprises a mixture of lithium cobalt oxide (LiₓCoO₂) and lithium nickel cobalt oxide (LiₓNi_{y}Co_{1-y}O₂) ; and
c) a nonaqueous electrolyte.

2. The electrochemical cell of claim 1 wherein the lithium cobalt oxide has 0.4 < x ≤ 1 and the lithium nickel cobalt oxide has 0.4 < x ≤ 1, 0 < y < 0.5.

3. The electrochemical cell of claim 1 wherein the positive electrode comprises LiCoO₂ and LiNi_{0.82}Co_{0.18}O₂.

4. The electrochemical cell of claim 1 wherein the positive electrode comprises a ratio of about 25% to 75% lithium cobalt oxide and about 75% to 25% lithium nickel cobalt oxide.

5. The electrochemical cell of claim 1 wherein the positive electrode includes at least one of a conductive additive and binder material.

6. The electrochemical cell of claim 5 wherein the conductive additive is selected from the group consisting of acetylene black, carbon black, graphite, powdered nickel, powdered aluminium, powdered titanium and powdered stainless steel, and mixtures thereof.

7. The electrochemical cell of claim 5 wherein the binder material is selected from the group consisting of polytetrafluoroethylene, polyvinylidene fluoride, ethylenetetrafluoroethylene, polyamides and polyimides, and mixtures 'thereof.

8. The electrochemical cell of claim 1 wherein the positive electrode comprises from about 3 to 10 weight percent of a conductive additive, about 1 to 5 weight percent of a powder fluoro-resin and the balance being the mixture of lithium cobalt oxide and lithium nickel cobalt oxide.

9. The electrochemical cell of claim 1 wherein the negative electrode comprises a carbonaceous material capable of intercalation or insertion of lithium.

10. The electrochemical cell of claim 9 wherein the carbonaceous material is selected from the group consisting of coke, graphite, acetylene black, carbon black and glassy carbon, and mixtures thereof.

11. The electrochemical cell of claim 1 wherein the negative electrodes comprises from about 3 to 10 weight percent of a powder fluoro-resin and about 90 to 97 weight percent of a carbonaceous material capable of intercalation or insertion of lithium.

12. The electrochemical cell of claim 1 wherein the nonaqueous electrolyte comprises a first solvent selected from the group consisting of an ester, an ether and a dialkyl carbonate, and mixtures thereof, and a second solvent selected from the group consisting of a cyclic carbonate, a cyclic ester and a cyclic amide, and mixtures thereof.

13. The electrochemical cell of claim 12 wherein the first solvent is selected from the group consisting of tetrahydrofuran, methyl acetate, diglyme, triglyme, tetraglyme, 1,2-dimethoxyethane, 1,2-diethoxyethane, 1-ethoxy,2-methoxyethane, dimethyl carbonate, diethyl carbonate, dipropyl carbonate; ethyl methyl carbonate, methyl propyl carbonate and ethyl propyl carbonate, and mixtures thereof.

14. The electrochemical cell of claim 12 wherein the second solvent is selected from the group consisting of propylene carbonate, ethylene carbonate, butylene carbonate, acetonitrile, dimethyl sulfoxide, dimethyl formamide, dimethyl acetamide, γ-valerolactone, γ-butyrolactone and N-methyl-pyrrolidinone, and mixtures thereof.

15. The electrochemical cell of claim 1 wherein the electrolyte includes an alkali metal salt selected from the group consisting of LiPF₆, LiBF₄, LiAsF₆, LiSbF₆, LiClO₄, LiAlCl₄, LiGaCl₄, LiNO₃, LiC(SO₂CF₃)₃, LiN(SO₂CF₃)₂, LiSCN, LiO₃SCF₂CF₃, LiC₆F₅SO₃, LiO₂CCF₃, LiSO₃F, LiB(C₆H₅)₄ and LiCF₃SO₃, and mixtures thereof.

16. A method for providing an electrochemical cell, comprising the steps of:
a) providing a negative electrode which is capable of intercalation or insertion of lithium or which comprises lithium metal or an alloy thereof;
b) providing a positive electrode operatively associated with the anode, wherein the positive electrode comprises a mixture of lithium cobalt oxide (LiₓCoO₂) and lithium nickel cobalt oxide (LiₓNi_{y}Co_{1-y}O₂); and
c) activating the negative and positive electrodes with a nonaqueous electrolyte.

17. A method according to claim 16 wherein the cell components are as defined in any of claims 2 to 15.
